Europäisches Patentamt

(19) European Patent Office

Office européen des brevets

(11) Numéro de publication: **0 030 190**
**A2**

(12) **DEMANDE DE BREVET EUROPEEN**

(21) Numéro de dépôt: **80401692.1**

(22) Date de dépôt: **27.11.80**

(51) Int. Cl.³: **G 01 M 11/04**
**G 02 B 7/00**

(30) Priorité: **29.11.79 FR 7929378**

(43) Date de publication de la demande:
**10.06.81 Bulletin 81/23**

(84) Etats Contractants Désignés:
**DE GB**

(71) Demandeur: **R.E.O.S.C. (RECHERCHES ET ETUDES D'OPTIQUE ET DE SCIENCES CONNEXES)**
**10, rue des Ecoles**
**Ballainvilliers F-91160 Longjumeau(FR)**

(72) Inventeur: **Paseri, Jacques**
**rue du bon Noyer Fontenay Les Briis**
**F-91640 Briis sous Forges(FR)**

(74) Mandataire: **Schrimpf, Robert et al,**
**Cabinet Regimbeau 26, Avenue Kléber**
**F-75116 Paris(FR)**

(54) Dispositif pour déplacer une pièce optique.

(57) L'invention concerne le déplacement d'une pièce d'optique au moyen d'un doigt d'entraînement qui est mû par une mécanique et qui, dans son mouvement, pousse une rampe solidaire de la pièce, ce qui provoque le déplacement de la pièce.

La rampe (1) est constituée par une lameressort et la position finale de la pièce P est déterminée par une butée fixe B2(B1) contre laquelle vient se plaquer la pièce.

Application aux pièces optiques escamotables des ensembles optiques soumis à des vibrations.

FIG.1

EP 0 030 190 A2

## Dispositif pour déplacer une pièce optique

L'invention concerne le déplacement d'une pièce optique, par exemple une lentille ou un groupe de lentilles, d'un ensemble optique, par exemple un appareil de visée, et s'applique notamment aux ensembles optiques exposés à subir des vibrations, comme c'est le cas, par exemple, des appareils utilisés à bord des chars, des avions ou des bateaux.

Ces déplacements ont généralement pour but de faire passer la pièce optique d'une position d'escamotage à une position de service et il est important, pour le bon fonctionnement de l'ensemble optique dont la pièce fait partie, que la pièce soit exactement maintenue dans la position de service à la fin de son déplacement, malgré les éventuelles vibrations.

Il est connu d'entraîner la pièce optique par un doigt qui est mû par une bielle ou autre mécanique et qui agit par poussée sur une rampe de la pièce pour provoquer le déplacement désiré de cette dernière.

Ces dispositifs sont sensibles aux vibrations, outre que la bielle peut avoir du jeu, si bien que la pièce peut ne pas se trouver ou se maintenir exactement en position de service.

La présente invention vise à supprimer ces effets possibles d'un jeu dans le mécanisme d'entraînement et des vibrations éventuelles sur la position de service de la pièce.

On y parvient selon l'invention en constituant la rampe par une lame-ressort et en déterminant la position de service par une butée fixe contre laquelle vient se plaquer la pièce sous l'effet de la déformation de lame-ressort.

Dans une réalisation préférée, le retour de la pièce vers sa position initiale (qui peut d'ailleurs être elle-même une autre position de service) est également assuré par le doigt d'entraînement, mû en sens inverse par la bielle ou autre mécanique, et qui pousse alors une autre lame-ressort, tandis que la position initiale de la pièce est déterminé par une autre butée fixe contre laquelle vient se plaquer la pièce sous l'effet de la déformation de ladite autre lame-ressort.

De préférence, la pièce est munie de deux lames-ressort qui déterminent entre elles un couloir à parois élastiques dans lequel se déplace ledit doigt pendant son mouvement.

De préférence, chaque lame a une extrémité libre et les extrémités libres des deux lames sont voisines.

Dans une variante, chaque lame est fixée à ses deux extrémités à la pièce.

Comme on le comprend, le mot "pièce" désigne non seulement la partie optique de la pièce mais l'ensemble de cette partie et de la monture de la pièce.

La pièce optique est normalement guidée dans son déplacement, lequel est par exemple linéaire ou de rotation, mais on ne décrira pas ce guidage qui est classique et sur lequel l'invention ne porte pas.

On expliquera encore l'invention en référence aux deux Figures du dessin joint.

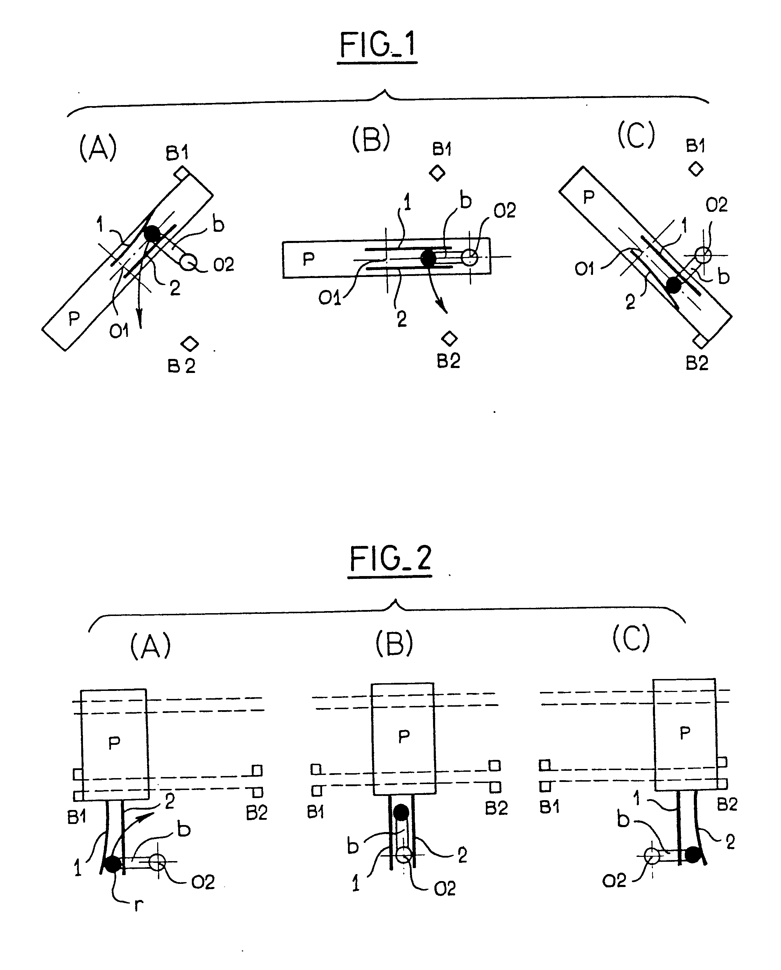

. La Figure 1 est relative au cas d'un déplacement de la pièce selon un mouvement de rotation ; et

. La Figure 2 est relative au cas d'un déplacement de la pièce selon un mouvement de translation.

Chaque figure montre trois phases du déplacement de la pièce.

Dans ces réalisations, le doigt d'entraînement est un roulement r porté à une extrémité d'une bielle b dont l'autre extrémité est montée à rotation autour d'un axe fixe.

Dans le cas de la Figure 1, la pièce P est déplaçable par rotation autour d'un axe O1.

Au départ, Figure 1 Schéma A, la pièce P est maintenue plaquée contre la butée $B_1$ à l'aide de la lame de ressort 1 fixée sur P.

Lorsque l'on fait tourner la bielle b autour de l'axe $O_2$ d'un mouvement uniforme le roulement r vient entraîner la lame 2 fixée à P. La pièce P est donc entraînée d'un mouvement de rotation autour de $O_1$. Sa vitesse est très faible au démarrage et croît ensuite progressivement pour atteindre une vitesse maximale dans la position du schéma B. Elle décroît ensuite progressivement pour atteindre une vitesse très faible lorsque P vient en contact avec $B_2$. A ce moment, la bielle b termine sa course en comprimant le ressort 2 pour plaquer P contre $B_2$ (schéma C).

Il est à remarquer que l'effort d'entraînement en rotation de la bielle b nécessaire pour comprimer la lame 2 est faible car cette lame est attaquée tangentiellement par le roulement r .

Le même dispositif convient de la même
façon pour assurer une translation de la pièce P comme
on le voit sur la Figure 2.

On notera que la pièce P, qui peut être
fragile, ne subit pas de choc ni d'accélération trop
forte et que la force de maintien ne lui est appliquée'
que lorsque la pièce est pratiquement en contact avec
une butée puisque c'est à ce moment que le doigt d'entraînement porte contre l'extrémité libre de la lame-
ressort.

# REVENDICATIONS

1. Dispositif pour déplacer une pièce d'optique d'un ensemble optique d'une position initiale à une position finale de service, au moyen d'un doigt d'entraînement qui est mû par une mécanique et qui, dans son mouvement, pousse une rampe solidaire de la pièce, ce qui provoque le déplacement de la pièce, caractérisé en ce que cette rampe est constituée par une lame-ressort (2) et en ce que la position finale est déterminée par une butée fixe $(B_2)$ contre laquelle vient se plaquer la pièce (P) sous l'effet de la déformation de lame-ressort.

2. Dispositif selon la revendication 1, dans lequel le retour de la pièce vers sa position initiale est également assuré par le doigt d'entraînement dans un mouvement inverse, caractérisé en ce que la pièce (P) est munie d'une autre lame-ressort (1) qui est poussée par le doigt (r) lors du mouvement inverse et en ce que la position initiale de la pièce est déterminée par une autre butée fixe $(B_1)$ contre laquelle vient se plaquer la pièce sous l'effet de la déformation de ladite autre lame-ressort.

3. Dispositif selon la revendication 2, caractérisé en ce que la pièce (P) est munie de deux lames-ressort (1,2) qui déterminent entre elles un couloir à parois élastiques dans lequel se déplace ledit doigt pendant son mouvement.

4. Dispositif selon la revendication 3, caractérisé en ce que chaque lame (1,2) a une extrémité libre et en ce que les extrémités libres des deux lames sont voisines.

5. Dispositif selon l'une des revendications 1 à 4, caractérisé en ce que ledit doigt d'entraînement est constitué par un roulement (r).

6. Dispositif selon l'une des revendications 1 à 5, caractérisé en ce que ledit doigt d'entraînement (r) est porté par une bielle tournante (b).

7. Dispositif selon la revendication 6, caractérisé en ce que ledit doigt (r) est monté à une extrémité de la bielle (b), l'autre extrémité de la bielle étant montée à rotation.

8. Application d'un dispositif selon l'une des revendications 1 à 7, au déplacement linéaire d'une pièce optique.

9. Application d'un dispositif selon l'une des revendications 1 à 7 au déplacement par rotation d'une pièce optique.

## FIG_1

(A)    (B)    (C)

## FIG_2

(A)    (B)    (C)